# EUROPÄISCHE PATENTSCHRIFT

(11) **EP 0 464 064 B1**
(45) Veröffentlichungstag und Bekanntmachung des Hinweises auf die Patenterteilung: **04.01.1995**
(21) Anmeldenummer: 90904755.7
(22) Anmeldetag: 21.03.1990
(51) Int. Cl.: F25C 1/04, F25C 1/08

(54) **VERFAHREN UND VORRICHTUNG ZUR HERSTELLUNG VON EISFIGUREN**
PROCESS AND DEVICE FOR MANUFACTURING ICE FIGURES
PROCEDE ET DISPOSITIF DE FABRICATION DE FIGURES EN GLACE

(30) Priorität: 21.03.1989 DE 3909316; 03.05.1989 DE 3914655
(43) Veröffentlichungstag der Anmeldung: 08.01.1992
(73) Patentinhaber: Hobelsberger, Josef, D-21255 Tostedt (DE)
(72) Erfinder: Hobelsberger, Josef, D-21255 Tostedt (DE)
(74) Vertreter: KUHNEN, WACKER & PARTNER
(86) Internationale Anmeldenummer: DE9000222
(87) Internationale Veröffentlichungsnummer: WO9011479

(56) Entgegenhaltungen:
- EP-A- 0 132 412
- DE-B- 1 065 259
- FR-A- 1 286 898
- FR-A- 2 348 653
- US-A- 2 896 557
- US-A- 3 233 562

## Beschreibung

Die Erfindung betrifft ein Verfahren zur Herstellung von gegebenenfalls klaren Eisfiguren gemäß den Oberbegriffen der Ansprüche 1 und 6 sowie eine Vorrichtung hierzu gemäß den Oberbegriffen der Ansprüche 13 und 14.

Eisfiguren werden bei gehobenen gastronomischen Anlässen wie kalten Buffets, Empfängen und Banketts zur Zierde und Dekoration oftmals in Verbindung mit Blumenschmuck und effektvoller Beleuchtung benutzt. Häufig werden Tiere oder Menschen in Eis nachgebildet. Allerdings können auch andere Figuren, z.B. Buchstaben oder Zahlen, die etwa Hinweise auf Daten bei feierlichen Gegebenheiten geben, aus Eis hergestellt werden. Die Größen der Eisfiguren liegen im Bereich von wenigen Zentimetern bis zu einigen Metern. Die Oberflächen von Eisfiguren sind meist fein strukturiert, beispielsweise bei der Nachbildung eines menschlichen Gesichtes oder bei der Darstellung des Gefieders einer Vogelnachbildung.

Eine bislang bekannte Herstellungsart von Eisfiguren ist es, mit Hilfe von Hammer und Meißel eine Figur aus einem Eisblock, der in seiner Größe die gewünschte Figur umgreift, zu schlagen. Der Zeitaufwand beläuft sich schon bei kleinen relativ einfachen Figuren auf etwa drei Stunden und ist für große und komplizierte Figuren entsprechend größer. Eine weitere Schwierigkeit der Eismeißeltechnik liegt darin begründet, daß viele Köche die dafür erforderliche Spezialausbildung nicht besitzen bzw. kein bildhauerisches Geschick haben. Ferner besteht das Risiko bei der Herstellung, daß der gewöhnlich unter Zeitdruck arbeitende Eisbildhauer kurz vor der Eröffnung einer Feier ein nur wenig gelungenes Werk hervorbringt oder daß kurz vor Fertigstellung der Figur durch einen unsachgemäßen Schlag ein wesentlicher Teil von der Figur abspringt oder die Figur insgesamt zerspringt. Abgesehen davon handelt es sich bei dem Eismeißelverfahren um ein Verfahren zur Herstellung einzelner individueller Eisfiguren, welches naturgemäß nicht zu einer Serienfertigung geeignet ist.

Die DE-A-31 33 617 stellt eine Abhilfe der oben beschriebenen Nachteile des Eismeißelverfahrens zur Verfügung. In dieser Druckschrift wird vorgeschlagen, Eisfiguren in Gießformen mit im wesentlichen starren Wänden herzustellen. Dabei werden die gefüllten Gießformen im allgemeinen in einem Kühlfach oder einem Kühlraum auf Temperaturen unter den Gefrierpunkt des Wassers abgekühlt. Jedoch offenbart die DE-A-31 33 617 eine weitere Ausführungsform, die einen stabförmigen Kühlkörper in die Gießform einführt, so daß der Gefriervorgang vom Kühlkörper ausgehend in Richtung auf die Gießformwände erfolgt.

Zwar wurde durch das in der DE-A-31 33 617 beschriebene Verfahren eine Vereinfachung der Herstellung von Eisfiguren gegenüber der Eismeißeltechnik erzielt, jedoch stellte sich heraus, daß dieses Verfahren aufgrund der relativ langen Gefrierzeiten und des großen Platzbedarfs, sowie des kältetechnischen Aufwandes der serienmäßigen Herstellung von Eisfiguren Probleme bereitet. Insbesondere bereitet die Herstellung von Klareis mit diesem Verfahren Schwierigkeiten, da es problematisch ist, innerhalb einer geschlossenen Form Wasser durch einen Kühlkörper von innen nach außen zu frieren und dabei zu bewegen, um Klareis zu erhalten. Da die Form umfangsseitig abgeschlossen ist, wird in jedem Falle das mit Verunreinigungen angereicherte Wasser letztendlich ebenfalls als Teil der Figur gefroren, so daß Trübstellen unvermeidlich sind. Außerdem muß ein übermäßiger Spannungsaufbau infolge der Volumenzunahme des Eises beispielsweise durch Anbringen von Entlastungskanälen kontrolliert werden.

Ausgehend vom Stand der Technik der DE-A-31 33 617 ist es daher Aufgabe der vorliegenden Erfindung, ein Verfahren sowie eine Vorrichtung zu schaffen, welche die schnelle und einfache Herstellung von Eisfiguren beliebiger Art, bei Bedarf auch aus Klareis, ermöglichen und welche gegebenenfalls zur Serienfertigung geeignet sind.

Die Lösung dieser Aufgabe erfolgt verfahrenstechnisch durch die kennzeichnenden Merkmale der Ansprüche 1 und 6, vorrichtungstechnisch durch die kennzeichnenden Merkmale der Ansprüche 13 und 14.

Da je Eisfigur mindestens zwei Teilstücke gebildet werden, verkürzt sich bei paralleler Herstellung der Teilstücke die Zeit, die zur Herstellung einer vollen Eisfigur erforderlich ist, ungefähr auf die Hälfte, weil jeweils nur die halbe Eisfigur oder ein noch kleinerer Bruchteil der Eisfigur massiv aus Eis gebildet werden muß. Weiterhin ist es möglich, durch Verwendung entsprechend vieler, unter den Gefrierpunkt des Wassers gekühlten, vorzugsweise konkav ausgebildeten Kühlflächen gleichzeitig die Teilstücke für mehrere Eisfiguren auszubilden.

Dadurch, daß Wasser in einer Überschußmenge mit der Kühlfläche in Kontakt gebracht wird und daran derart erstarrt, daß die sich bildende Eisschicht von der Kühlfläche wegwächst, wird zum einen gewährleistet, daß die gängigen Sprüh- und Schleuderverfahren zur Herstellung von Klareiskörpern, wie sie beispielsweise in der DE-A-37 21 334 beschrieben sind, verwendet werden können. Zum anderen führt das Wegwachsen der sich bildenden Eisschicht von der Kühlfläche dazu, daß im Wasser enthaltene Gase, insbesondere Luft, während des Gefrierprozesses an der Kühlfläche bzw. der bereits ausgebildeten Eisschicht an der Gefrierfront, also der Phasengrenze zwischen Eis und Luft gehalten werden und durch die Überschußmenge an Wasser ausgewaschen werden, so daß sich ein transparentes, mindestens jedoch transluzentes Teilstück einer Eisfigur bildet. Die Oberflächenfeingestaltung der späteren Außenoberfläche des Teilstückes einer Eisfigur kann dabei allein durch die Art der Ausbildung der Kühlfläche bewirkt werden. Dadurch können bei den gebildeten Teilstücken beispielsweise Oberflächen mit feinen Ziselierungen erreicht werden.

Das Problem der Volumendehnung des Eises wird dadurch unerheblich, daß die als Form dienende Kühlfläche laufend von einer Seite her mit Wasser beaufschlagt wird und somit ohne Bedeutung ist, welches Wasservolumen zur Bildung des jeweils an der Kühlfläche gewünschten Eisvolumens erforderlich ist. Dadurch, daß die Teilstücke von der Kühlfläche getrennt und an mindestens einem Teil der freien Oberfläche plan angetaut werden, wird erreicht, daß eventuelle Unebenheiten, die sich unter Umständen durch Inhomogenitäten in der Verteilung des mit der Kühlfläche in Kontakt zu bringenden Wassers ergeben können, ausgeglichen werden, so daß sich nach dem Zusammenfügen der angetauten Oberflächen und erneutem Abkühlen unter den Gefrierpunkt des Wassers einheitliche Eisfiguren mit im Inneren liegenden, vormals freien Oberflächen der Teilstücke ergeben. Sollte das entstehende Tauwasser nicht ausreichen, um die Teilstücke miteinander zu verbinden, so kann gegebenenfalls noch zusätzlich Wasser als Haftvermittler auf die freien Oberflächen der Teilstücke aufgebracht werden. Das Antauen der freien Oberflächen kann beispielsweise mit einer Heizplatte geschehen. Dabei muß keineswegs die gesamte freie Oberfläche angetaut werden, sondern beispielsweise nur eine ringförmige Zone im Falle einer runden freien Oberfläche.

Falls beispielsweise versehentlich zu dicke Teilstücke gebildet werden, so können diese ohne Schwierigkeit durch Antauen und Abschmelzen wieder auf die gewünschte Dicke gebracht werden.

Als weitere Möglichkeit kann bei dem erfindungsgemäßen Verfahren die Sprüh- oder Schleudervorrichtung auch verschieblich beweglich angeordnet sein, so daß die Sprüh- oder Schleudervorrichtung unter einer Reihe von Kühlflächen-Anordnungen hindurchgefahren werden kann und dabei unter jeder Kühlflächen-Anordnung so lange Wasser mit den Kühlflächen in Kontakt bringt, bis die Teilstücke der Eisfiguren in der jeweiligen Kühlflächen-Anordnung in der gewünschte Größe ausgebildet sind. Nach der Ausbildung der Teilstücke der Eisfiguren in einer Kühlflächen-Anordnung wird die Sprüh- oder Schleudervorrichtung kurzzeitig gestoppt und diese unter eine folgende Kühlflächen-Anordnung gefahren. Nach Beaufschlagung durch die Sprüh- oder Schleudervorrichtung können dann die Teilstücke entformt und aufgefangen werden, so daß sie dann beispielsweise manuell plan angetaut und zusammengefügt werden können, wodurch die Serienfertigung von Eisfiguren in relativ großen Stückzahlen gewährleistet wird. Insbesondere können hierdurch Teilstücke von verschiedenartigen Eisfiguren auf einer einzigen Produktionsstraße in einem Arbeitsgang gefertigt werden.

Eine weitere Möglichkeit, Eisfiguren gemäß Anspruch 1 herzustellen, liegt darin, daß auf konventionelle Kühlkörper auf Verdampfer-, bzw. Flüssigkühlmittel, vorzugsweise auf Glykolbasis, an denen eine konvexe Kühlfläche ausgebildet ist, zurückgegriffen wird, wobei die Kühlfäche in diesem Falle in eine Überschußmenge Wasser eingetaucht wird. Je nach Ausbildung der Kühlfläche eignet sich dieses Tauchverfahren besonders gut zur Herstellung schalenförmiger Gebilde.

Dabei können solche Schalen aus Eis an ihrem der Öffnung entgegengesetzten Ende plan angetaut werden und umgekehrt zusammengefügt und dann wieder abgekühlt werden, so daß die beiden schalenförmigen Teilstücke zu einer einstückigen, pokalförmigen Eisfigur zusammengefügt werden.

Der Anwendung dieser Verfahrensweise liegt der besondere Vorteil zugrunde, daß mit Hilfe eines konventionellen Kühlkörpers auf Verdampfer- bzw. Glykolbasis und der daran ausgebildeten konvexen Kühlfläche besonders leicht Teilstücke einmal aus Klareis und einmal aus trübem Eis gebildet werden können; nämlich aus Klareis dann, wenn die Überschußmenge an Wasser um die eintauchende Kühlfläche bewegt wird und aus trübem Eis dann, wenn die Überschußmenge Wasser, in die die Kühlfläche eintaucht, sich in Ruhe befindet.

Hierdurch ergeben sich attraktive Möglichkeiten, Klareis mit Trübeis zu kombinieren, etwa in Form einer pokalförmigen Eisfigur, deren als Fuß dienendes schalenförmiges Teilstück aus Trübeis besteht, während das ebenfalls schalenförmige als Oberteil dienende Teilstück aus Klareis, gegebenenfalls mit einem oder mehreren darin enthaltenen Einschlüssen, besteht oder umgekehrt. Auch ist hierbei die Kombination von mehr als zwei Teilstücken zur Herstellung einer zusammengesetzten Eisfigur mit verschiedenen Eisarten denkbar.

Bei diesem Verfahren sind die inneren Oberflächen der schalenförmigen Teilstücke immer exakt maßhaltig mit den die Teilstücke ausbildenden Kühlflächen.

Bei Bedarf können solche, auf einer Seite planen Teilstücke einer Eisfigur auch selbständig, etwa vor Kerzen oder Blumen verwendet werden. Auch ist die Verwendung der Teilstücke z. B. als Elemente in einem Reliefbild, insbesondere einem Eisreliefbild, möglich.

Die Maßnahmen des Anspruchs 2 weisen den Vorteil auf, daß es mit einer geteilten Kühlfäche möglich ist, komplexe Teilstücke, beispielsweise solche mit Hinterschneidungen zu bilden und diese aufgrund der geteilten Kühlfläche zu entformen.

Ein weiterer Vorteil liegt darin begründet, daß die einander gegenüberliegenden in Kontakt mit der Kühlfläche stehenden Oberflächenelemente sich exakt maßhaltig auf den den jeweiligen Oberflächenelementen anliegenden Oberflächen des Teilstücks abbilden.

Die Maßnahmen des Anspruchs 3 haben den Vorteil, daß bei der Ausbildung von Teilstücken mit Zonen unterschiedlicher Dicke unterschiedliche Kühlleistung an Stellen mit unterschiedlicher Eisschichtdicke angelegt werden können, so daß ein nahezu gleichmäßiges Durchfrieren von Teilstücken von Eisfiguren mit unterschiedlicher Eisschichtdicke gewährleistet ist, auch wenn eine gleichförmige Wasserbeaufschlagung erfolgt.

Die Maßnahmen des Anspruchs 4 weisen den Vorteil auf, daß durch das kurzzeitige Erwärmen der Kühlfläche die Teilstücke von der Kühlfläche getrennt und hierdurch das Teilstück entformt werden kann und gleichzeitig eine Oberflächenverfeinung erreicht wird, so daß das Erfordernis einer Nachbearbeitung derjenigen Seite der Teilstücke, die mit der Kühlfläche in direktem Kontakt stehen, entfällt. Sollte jedoch eine zusätzliche Oberflächenbearbeitung erwünscht sein, so kann diese selbstverständlich auch entweder mit der üblichen Meißeltechnik bzw. mit lötkolbenähnlichen Werkzeugen geschehen.

Die Unterbrechung der Umwandlung des Wassers in Eis gemäß Anspruch 5 weist den Vorteil auf, daß auf der Oberfläche der bis zum Abbrechen des Eisbildungsvorganges bereits gebildeten Eisschicht mit Wasser in Berührung gebracht, zum Beispiel benetzte oder an der Eisschicht mit gefrierendem Wasser in Berührung gelangende Einschlüsse "aufgeklebt" werden können; Es können sogar regelrechte Bilder auf der Oberfläche der Eisschicht angeordnet werden, ohne daß auf zusätzliche mechanische Halterungselemente wie Drähte, Klammern, Klemmen usw. zurückgegriffen werden muß, da alleine der verwendete Haftvermittler die Fixierung der Einschlußkörper auf der Eisfläche bewirkt. Mit diesem Verfahren lassen sich vorzugsweise dünne Einschlußkörper, etwa Fotografien auf der Oberfläche eines Teilstückes anbringen. Anschließend kann dieses Teilstück mit seinem Einschlußkörper benetzt werden und mit einem anderen geeigneten Teilstück ohne Eiseinschlußkörper auf der freien Oberfläche zusammengefügt und unter den Gefrierpunkt des Wassers abgekühlt werden, so daß sich dann ein vollständig eingeschlossener Einschlußkörper im Inneren der aus den beiden Teilstücken zusammengesetzten Eisfigur bildet.

Den Gefrierprozeß fortzusetzen hat zur Folge, daß der Einschlußkörper oder eine Mehrzahl von Einschlußkörpern kontinuierlich derart in das von der Kühlfläche wegwachsende Eis einwächst, daß das Auftreten von sichtbaren Eis/Eis-Grenzflächen bei Bedarf nahezu vermieden werden kann und durch diese Maßnahmen ein Teilstück einer Eisfigur mit einem oder mehreren von homogenem Eis umgebenden Einschlüssen entsteht. falls erwünscht, können ein transparentes, zumindest jedoch transluzentes Teilstück einer Eisfigur und nach dem Zusammenfügen eine einheitliche Eisfigur erhalten werden, bei welcher der Einschluß optisch voll zur Geltung kommt. Auch hier besteht die Möglichkeit, bei Bedarf die erste Eisschicht aus trübem Eis herzustellen und die zweite aus Klareis.

Ein Einschlußkörper kann auch vor Beginn der Eisbildung direkt auf die Kühlfläche des Kühlkörpers geheftet werden. Dies führt dazu, daß Einschlußkörper auf derjenigen Oberfläche des Teilstückes, welche der Kühlfäche zugewandt ist, derart eingeschlossen werden, daß die Einhüllende der äußeren Oberfläche der Einschlußkörper und die Einhüllende der äußeren Oberfläche des Teilstücks zunächst zusammenfallen und sich dann mit fortschreitendem Schmelzen des Teilstückes einer Eisfigur auseinanderklaffen, so daß Eisfiguren mit reliefartig hervortretenden Einschlußkörpern gebildet werden. Wasser als Haftvermittler zu verwenden, hat den Vorteil, daß dies für den Routinebetrieb einen sehr geringen Aufwand bedeutet.

Eine weitere Lösung der Aufgabe der Erfindung erfolgt gemäß Anspruch 6: Dadurch, daß wenigstens zwei Kühlkörper, die im wesentlichen einander gegenüberliegend angeordnet werden, mit Wasser in Kontakt gebracht werden, bildet sich an jedem Kühlkörper eine von dem Kühlkörper wegwachsende Eisschicht. Die Eisschichten eines jeden Kühlkörpers wachsen dabei solange aufeinander zu, bis sie sich gegenseitig berühren. Durch das Berühren verfrieren die beteiligten Eisschichten miteinander, so daß eine einstückige Eisfigur gebildet wird. Hierdurch ergibt sich insgesamt eine noch größere Arbeitsgeschwindigkeit als bei dem Verfahren nach Anspruch 1, da die Eisfigur in einem Stück gebildet werden kann.

Die einander gegenüberliegende Anordung der Kühlkörper kann bei dem Verfahren gemäß Anspruch 6 bevorzugt in Schwerkraftrichtung oder aber senkrecht zur Schwerkraftrichtung oder für spezielle Anwendungen in jedem beliebigen Winkel zur Schwerkraftrichtung, geschehen.

Zum Inkontaktbringen des Wassers mit den Kühlkörpern können diese beispielsweise von dem zu frierenden Wasser im Überschuß umspült werden, wobei zur Erzielung von Klareis das Wasser gegebenenfalls, vorzugsweise mit Konvektionseinrichtungen, bewegt wird oder es können die gängigen Sprüh- und Schleuderverfahren zur Herstellung von Klareiskörpern, wie sie beispielsweise in der DE-A-37 21 334 beschrieben sind, verwendet werden.

Dabei führt das Wegwachsen der sich bildenden Eisschicht von der Kühlfläche dazu, daß im Wasser enthaltene Gase, insbesondere Luft, während des Gefrierprozesses an der Kühlfäche bzw. der bereits ausgebildeten Eisschicht an der Gefrierfront, also der Phasengrenze zwischen Eis und Wasser, gehalten werden und entweder durch Konvektion oder durch Begasen mit Luft aus dem Flüssig/Gas/Fest-Gleichgewicht der Gefrierfront entfernt werden, so daß sich eine transparente, mindestens jedoch transluzente Eisfigur bildet. Die Form der Eisfigur wird dabei durch die Art der Ausbildung der Kühlfläche bewirkt.

Die Fertigstellung der einstückigen Eisfigur wird erfaßt. Dies kann bei Bedarf auch automatisiert durch elektromechanische, elektronische, optoelektronische sowie durch optische Verfahren realisiert werden, wobei ein bestimmter Parameter durch die Erfassung der Fertigstellung zur Verfügung gestellt wird. In der einfachsten Ausführungsform wird der Parameter dazu verwendet, dem Bedienungspersonal z.B. ein akustisches oder optisches Signal zu geben, woraus das Personal entnimmt, daß die einstückige Eisfigur fertig ist. Dadurch wird das Bedienungspersonal lediglich damit belastet, die fertiggestellte Eisfigur nach Ablösen von den Kühlkörpern aus der Vorrichtung zum Herstellen von Eisfiguren herauszunehmen, so daß der Gefrierprozeß automatisch abläuft und bereits hierdurch größere Stückzahlen gefertigt werden können.

Es ist jedoch auch denkbar, daß der erfaßte Parameter zur weitergehenden Automatisierung und/oder Prozeßsteuerung verwendet wird; so wäre etwa die Initialisierung einer kurzzeitigen Aufwärmung der Kühlkörper möglich, wodurch sich die geschilderte einstückige Eisfigur von den Kühlflächen der Kühlkörper ablöst und anschließend die einstückige Eisfigur manuell herausgenommen wird.

Weiterhin denkbar ist die Möglichkeit auch die manuelle Herausnahme der einstückigen Eisfigur zu automatisieren und durch den zur Verfügung gestellten Parameter zu steuern. Hierbei wäre es zum Beispiel möglich, daß die Kühlkörper auf eine Art Schlitten montiert sind und nach Erfassung des Parameters, der die Fertigstellung des einstückigen Eisfigur anzeigt, sodann der Schlitten aus dem Wasserbad herausfährt und die Kühlkörper nach kurzzeitiger Aufwärmung in Richtung eines geeigneten Transportbandes geschwenkt und anschließend so weit geöffnet werden, daß die einstückige Eisfigur auf das Transportband gleitet und in ein gekühltes Lager transportiert wird. Anschließend werden die Kühlkörper wieder auf ihren gewünschten Abstand voneinander gebracht, zurückgeschwenkt und wieder in das Wasser eingetaucht, so daß ein erneuter Gefrierprozeß zur Herstellung einer einstückigen Eisfigur ablaufen kann. Damit steht ein vollautomatischer Prozeß zur Herstellung von einstückigen Eisfiguren zur Verfügung, wobei ein nochmaliger Geschwindigkeitsgewinn erzielt wird und der erzielte Stückzahlenausstoß pro Zeiteinheit zur Fertigung größerer Stückzahlen geeignet ist. Die Maßnahme, daß die Kühlkörper gegebenenfalls mit variablem Abstand angeordnet werden können, hat den Vorteil, daß die Stärke der Eisschichten im Bereich der Berührungszone der von den Kühlkörpern wegwachsenden Eisschichten variiert werden kann. Eine Veränderung dieser Berührungszone kann auch dadurch erreicht werden, daß die einzelnen Kühlkörper mit verschiedenen Kühlleistungen und/oder verschiedenen Kühlzeiten versorgt werden können. So ist es beispielsweise denkbar, daß ein als Fuß dienender Teil einer Eisfigur zuerst in einer gewünschten Stärke vorgefroren wird, bevor der vertikal darüberliegende Kühlkörper, der den oberen Teil der Eisfigur herstellt, mit Kälteleistung versorgt wird. Durch diese Maßnahme ergibt sich ein mächtiger Fuß, der in der Lage ist, auch schwere obere Teile einer Eisfigur zu tragen oder der einen im Verhältnis hierzu dünnen oberen Teil einer Eisfigur trägt.

Weiterhin ist mit der Variation des Abstands der Kühlkörper, insbesondere bei konkaver Ausbildung der Kühlfläche, eine Feingestaltung der Berührungszone der beteiligten Eisschichten möglich, da die Berührungszone umso schärfer ausgebildet wird, je weiter sich die beiden Kühlkörper annähern.

Die Fertigstellung der einstückigen Eisfigur durch einen Sensor und/oder elektronische Bildauswertung gemäß Anspruch 8 zu erfassen hat den Vorteil, daß es mit geringem meßtechnischem Aufwand möglich ist, den Zeitpunkt der Fertigstellung der einstückigen Eisfigur festzustellen und diesen z.B. dem Bedienungspersonal zu melden oder einen automatischen Prozeß einzuleiten, bei dem die Kühlkörper beispielsweise kurzzeitig erwärmt werden, so daß sich die gebildete Eisfigur von den Kühlflächen der Kühlkörper ablöst. Ferner kann durch das gemessene Signal der bei vertikaler Anordnung der Kühlkörper obere Kühlkörper von der Eisfigur entfernt werden und diese selbst beispielsweise durch einen Robot entnommen werden. Die Verwendung einer elektronischen Bildauswertung gestattet ferner auch die überwachung des gesamten Gefrierprozesses von einem fernen Standpunkt aus, der beispielsweise außerhalb des Kältebereiches liegen kann. Ein weiterer Vorteil, eine elektronische Bildauswertung zu verwenden, liegt darin begründet, daß es hierdurch möglich ist, die Bilddaten über die Fertigstellung der einstückigen Eisfigur einem Computer zuzuführen, der insbesondere die Berührungszonen der beteiligten Eisschichten mit den gespeicherten Daten einer bereits bekannten und bewährten Berührungszone vergleicht, so daß bei übereinstimmung der gespeicherten mit den aktuellen Bilddaten der gebildeten Berührungszone der einstückigen Eisfigur, der Gefrierprozeß durch den Rechner beendet wird, bzw. weitere Prozeßschritte in Gang gesetzt werden. Durch die Benutzung einer rechnergestützten Bildauswertung ist es ferner möglich, die Berührungszone der Eisschichten am Bildschirm zu editieren bzw. den Gefrierprozeß aufgrund bekannter Daten zu simulieren, so daß die optimalen Eigenschaften, hinsichtlich der Gefrierzeit, der Gestaltung der Berührungszone, sowie der Fertigstellung der einstückigen Eisfigur, ermittelt werden und realisiert werden können. Weiterhin ist es durch die Verwendung eines Computers möglich, die Entwicklung der Eisfigur kontinuierlich zu erfassen und falls Abweichungen von der erwünschten Form der Eisfigur auftreten, frühzeitig regelnd, z. B. in die Kühlleistung, einzugreifen.

Die Maßnahmen des Anspruchs 9, als Kühlkörper konventionelle Kühlkörper zu verwenden, ist insofern vorteilhaft, als auf bewährte Techniken, insbesondere Glykoldurchströmung zurückgegriffen werden kann. Bei Bedarf kann auch ein Verdampferkühlkörper eingesetzt werden. Ferner können auch speziell geformte oder mit spezieller gewünschter Oberfläche versehene Kühlkörper, die z.B. feine Ziselierungen aufweisen können, leicht hergestellt werden.

Die koaxiale Anordnung der Kühlkörper gemäß Anspruch 10 führt dazu, daß eine symmetrische, einstückige Eisfigur entsteht, beispielsweise ein Eis- bzw. Klareispokal, dessen oberer beispielsweise einer beispielsweise halbkugelförmigen Eisschale besteht und dessen unterer Teil z. B. aus einem kugelkalottenförmigen Sockel besteht, wobei die Tangentialebene im Scheitelpunkt der halbkugelförmigen Eisschale die Längsachse des Fußteils im Winkel von 90° schneidet. Hierdurch werden asymmetrische Eisfiguren vermieden, die unter ungünstigen umständen entstehen können, wenn eine Eisfigur aus mehreren Teilstücken durch Antauen von Verbindungsflächen der Teilstücke und Zusammenfügen der Teilstücke zu einer einstückigen Eisfigur, gebildet wird.

Die Maßnahme, Kühlkörper mit konvexen Kühlflächen zu verwenden, hat den Vorteil, daß hierdurch schalenförmige Eisfiguren hergestellt werden können, so daß diese mit einem Inhalt beliebiger Art, insbesondere einen verzehrbaren, gefüllt werden können.

Kühlkörper mit konkaven Kühlflächen zu verwenden, weist den Vorteil auf, daß durch konkave Kühlflächen die Möglichkeit gegeben ist, die spätere Außenoberfläche der Eisfigur exakt zu gestalten, da die durch konkave Kühlflächen gebildete Außenoberflächen einer Eisfigur exakt maßhaltig mit der Oberfläche der konkaven Kühlfläche sind. So können beispielsweise die Oberflächen der konkaven Kühlflächen feine Ziselierungen aufweisen, die dann als Komplementärziselierung auf der Außenoberfläche der gebildeten Eisfigur auftreten. Auch kann die Kühlleistung eines jeden konkaven oder auch konvexen Kühlkörpers beispielsweise durch Veränderung der Kühlschlangendichte im Inneren des Kühlkörpers variiert werden, so daß eine einheitlich wachsende Gefrierfront gebildet wird, obwohl die durch die Kühlfläche der Kühlkörper gebildete Form verschiedene Tiefen aufweist. Dabei wird zweckmäßigerweise die der Kühlfläche abgewandte Seite des Kühlkörpers thermisch isoliert, so daß die angelegte Kühlleistung im wesentlichen an der Kühlfläche des Kühlkörpers zur Verfügung steht. Insbesondere hinsichtlich weiterer Einzelheiten der Ausgestaltung solcher Kühlflächen mit regelbaren Kühlleistungen wird auf die deutsche Patentanmeldung DE-A-39 09 316 des Anmelders vom 21.03.1989 verwiesen und vollinhatlich Bezug genommen.

Die Verwendung von Kühlkörpern, wobei der eine eine konvexe und der andere eine konkave Kühlfläche aufweist hat neben einer Herstellbarkeit von Eisfiguren mit konvexen Figurenelementen mit ziselierter konvexer Oberfläche den Vorteil, daß beide Oberflächen einer schalenförmigen Eisfigur mit einer besonderen Oberflächenausbildung versehen werden können.

Gemäß Anspruch 11 stehen eine Reihe von vorteilhaften Möglichkeiten zur Verfügung, Wasser mit den Kühlkörpern in Kontakt zu bringen. Hierdurch kann je nach Bedarf auf eine bestimmtes Verfahren zurückgegriffen werden, wobei es bei der vorliegenden Erfindung bevorzugt wird, ein Wasserbad zu verwenden, in welches die Kühlkörper eintauchen.

Die Maßnahmen des Anspruches 12 haben den Vorteil, daß solche Eisfiguren bevorzugt im Bereich der gehobenen Gastronomie eingesetzt werden können, etwa zum Kühlen von Speisen und Getränken sowie zur Dekoration von festlichen Tafeln. Eisfiguren zumindest weitgehend aus Klareis herzustellen hat den Vorteil, daß hierdurch besonders reizvolle dekorative Elemente entstehen, wobei die hergestellten Eisfiguren aus Klareis auch Einschlüsse der verschiedensten Art enthalten können.

Insbesondere hinsichtlich des Einbringens von Einschlüssen in Eiskörper bzw. Eisfiguren sowie weiteren Einzelheiten wird auf die Patentanmeldungen DE-A-39 09 317 und DE-A-39 09 318 vom 21.03.1989 desselben Anmelders vollinhaltlich Bezug genommen.

Anspruch 13 betrifft eine Vorrichtung zur Durchführung des Verfahrens nach Anspruch 1 und Anspruch 14 betrifft eine Vorrichtung zur Durchführung des Verfahrens nach Anspruch 6.

Die Ansprüche 15 bis 17 haben vorteilhafte Weiterbildungen der Vorrichtung nach Anspruch 14 zum Inhalt.

Durch die Verwendung konkav geformter Kühlflächen kann praktisch jedes beliebig geformte Teilstück hergestellt werden.

In vorteilhafter Weise kann beispielsweise eine dekorative pokalförmige Eisfigur hergestellt werden, bei der beispielsweise der umgedrehte, schalenförmige Fuß aus trübem Eis bestehen kann, während der obere, ebenfalls schalenförmige Teil der Eisfigur aus Klareis, gegebenenfalls mit einem oder mehreren Einschlußkörpern besteht.

Ferner besteht durch diese Maßnahmen die Möglichkeit, in ein als Fuß einer pokalförmigen Eisfigur dienendes Teilstück aus Klareis Blumenstiele einzuschließen, während in das obere Teilstück entsprechend angeordnete Blüten mit kürzeren Stielen als Einschlußkörper angeordnet werden, so daß sich das Gesamtbild eines gebundenen Blumenstraußes ergibt.

Die Verwendung eßbarer Einschlüsse führt zu dem Vorteil, daß eine mit einer solchen Eisfigur gekühlten Speise oder ein damit gekühltes Getränk noch in besonderer Art und Weise aufgewertet wird.

Biologische Einschlüsse zu verwenden weist den Vorteil auf, daß solche Einschlüsse in der Regel für den menschlichen Gastrointestinaltrakt besser verträglich sind als synthetische Einschlußkörper.

Weitere Vorteile der Erfindung ergeben sich aus der nachfolgenden Beschreibung eines Ausführungsbeispiels anhand der Zeichnung.

Es zeigt:
- Fig. 1: eine Vorrichtung zur Durchführung des erfindungsgemäßen Verfahrens in perspektivischer Darstellung;
- Fig. 2: einen Längsschnitt einer an einer Formvorrichtung ausgebildeten Kühlfläche;
- Fig. 3: einen Querschnitt entlang der Linie III-III in Fig. 2

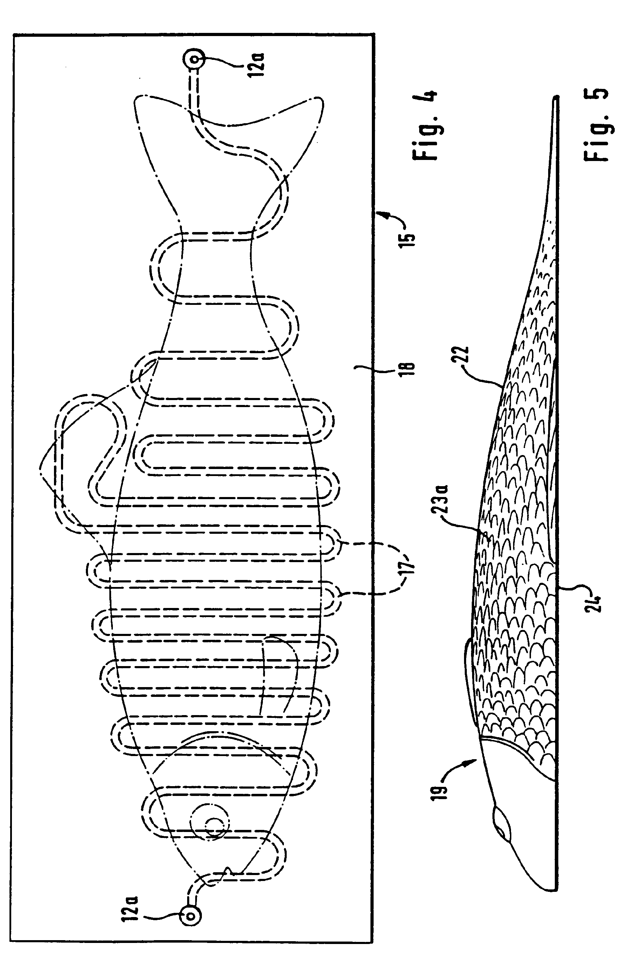

- Fig. 4: eine Draufsicht auf die Formvorrichtung gemäß Fig. 2 in Richtung des dortigen Pfeils IV;
- Fig. 5: eine Seitenansicht eines Teilstückes einer Eisfigur, welches in einer in Fig. 2 dargestellten Kühlfläche gebildet wird;
- Fig. 6: eine perspektivische Darstellung einer einheitlichen Eisfigur, die sich ergibt, wenn zwei Teilstücke gemäß Fig. 5 zusammengefügt werden;
- Fig. 7: einen Längsschnitt einer Formvorrichtung zur Herstellung von schalenförmigen Teilstücken;
- Fig. 8: eine pokalförmige Eisfigur.
- Fig. 9: eine Vorrichtung zur Durchführung eines erfindungsgemäßen Verfahrens mit vertikal koaxialer Anordnung der Kühlkörper in perspektivischer Darstellung;
- Fig. 10: eine in der erfindungsgemäßen Vorrichtung gemaß Fig. 1 hergestellte einstückige Eisfigur in perspektivischer Darstellung;
- Fig. 11: eine erfindungsgemäße Vorrichtung mit horizontal koaxialer Anordnung der Kühlkörper in perspektivischer Darstellung; und
- Fig. 12: eine in einer Vorrichtung gemäß Fig. 11 erfindungsgemäß hergestellte einstückige Eisfigur in perspektivischer Darstellung.

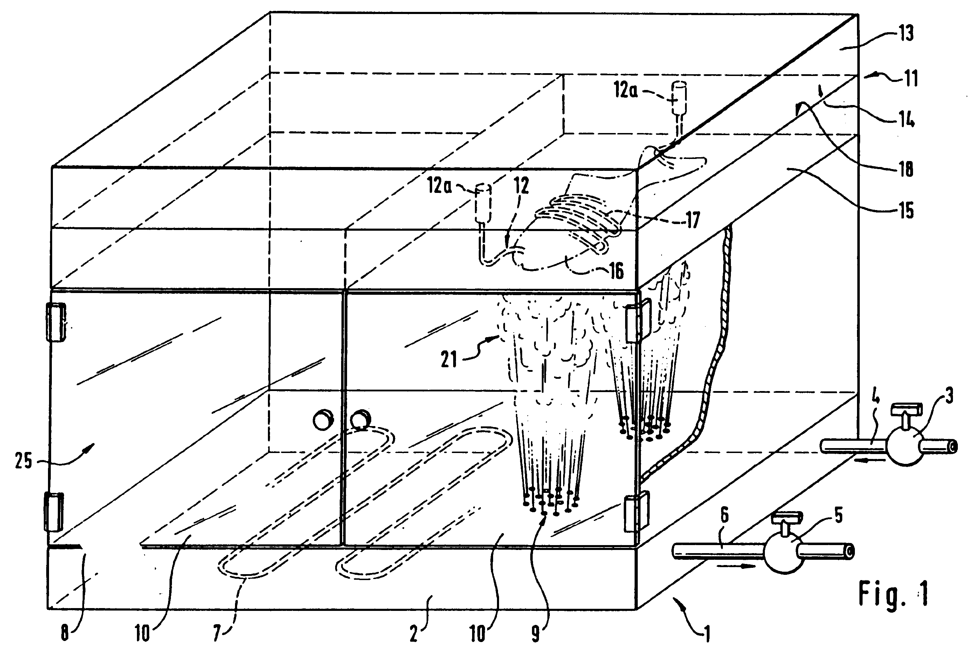

In Fig. 1 ist mit 1 eine Vorrichtung zur Durchführung des erfindungsgemäßen Verfahrens zur Herstellung von Eisfiguren bezeichnet. Die schrankähnliche, thermisch gegenüber der Umgebung isolierte Vorrichtung 1 weist einen Vorratsbehälter 2 für Wasser auf, der mit einer über ein Absperrventil 3 versehenen Wasserzuleitung 4, sowie einer über ein Ventil 5 absperrbaren Ablaßleitung 6 ausgestattet ist. Ferner weist der Vorratsbehälter 2 in seinem Inneren Verdampferkühlschlangen 7 auf. Desweiteren befinden sich auf der Oberfläche 8 des Vorratsbehälters 2 spiralförmig angeordnete Düsenöffnungen 9. Darüber hinaus wird die Vorrichtung 1 während des Betriebs durch transparente Türen gegenüber der Umgebung abgeschlossen.

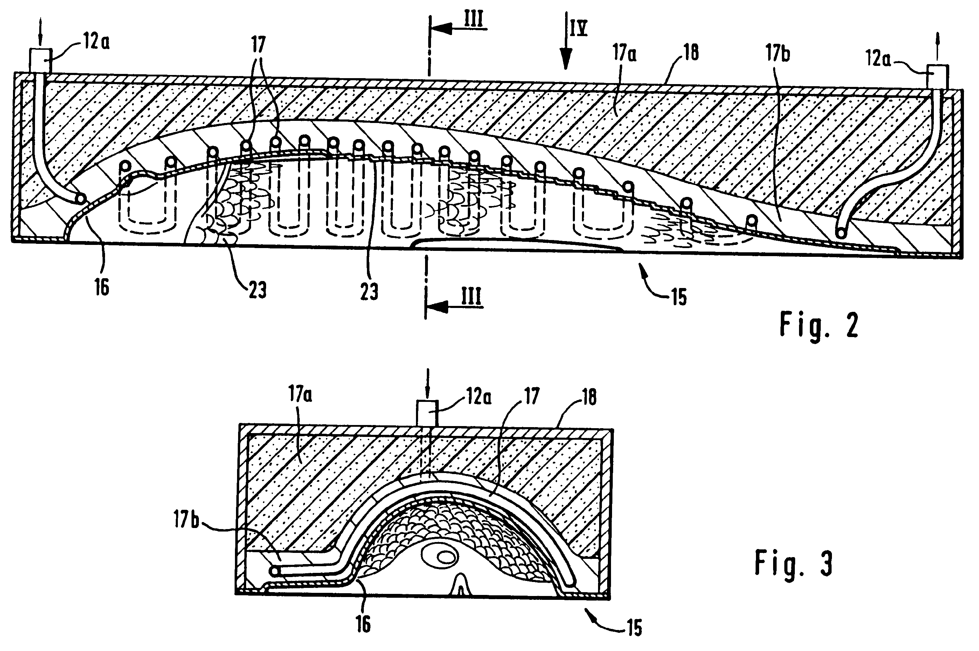

Im oberen Teil 11 der Vorrichtung 1 verläuft ein Kühlmittelkreislauf 12, der in Fig. 1 nur mit seinen Anschlußstutzen 12a strichpunktiert verdeutlicht ist und dessen Kühlmittel durch einen konventionellen Verdampfer gekühlt wird. Der Kühlmittelkreislauf 12 ist eingebettet in einen Block 13, der aus gut wärmeisolierendem Material besteht. An der Unterseite 14 des Blocks 13 befinden sich an Formvorrichtungen 15 konkav ausgebildete Kühlflächen 16, wobei die Kühlflächen 16 die negative Form eines halben Fisches gemäß Fig. 2 aufweisen. Die Formvorrichtungen bestehen aus einem gut wärmeleitenden Material und weisen in ihrem Inneren Kühlschlangen 17 auf. Die Kühlschlangen 17 werden mit ihrem Zulauf 17a und ihrem Ablauf 17b in den Kühlmittelkreislauf 12 des Blocks 13 eingeschleift. An den Stellen, an denen ein erhöhter Kältebedarf besteht, ist die Windungszahl der Kühlschlangen 17 pro Volumeneinheit bzw. pro Flächeneinheit größer als an Stellen bzw. Flächen, an denen weniger Kälte benötigt wird. Dann werden die Formvorrichtungen mit ihrer Rückseite 18 der Kühlfläche 16 an der Unterseite 14 des Blocks 13 montiert, so daß die Unterseite 14 des Blockes 13 und die obere Seite 18 der Formvorrichtungen 15 plan aneinander liegen. Die Formvorrichtungen 15 sind derart gestaltet, daß sie bei Bedarf schnell und einfach ausgewechselt werden können.

Zur Herstellung eines Teilstückes 19 einer Eisfigur wird das Wasser in dem Vorratsbehälter 2 auf einer konstanten Temperatur von +O,7°C gehalten und über spiralenförmig angeordnete Düsenöffnungen 9 derart vernebelt, daß die Wassernebel 21 kontinuierlich mit den formbildenden Kühlflächen 16 in Kontakt gebracht werden und an den Kühlflächen 16 zu Eis erstarren und die sich bildende Eisschicht von der Kühlfläche 16 wegwächst. Durch dieses Verfahren wird Klareis gebildet, weil das Wasser während des Gefrierprozesses an den Kühlflächen 16 die Tendenz aufweist, Gaseinschlüsse, insbesondere Lufteinschlüsse an der Phasengrenze zwischen Eis und Luft anzusammeln, so daß eventuell aus dem Wasser durch Abkühlen austretende Luft sich an der Phasengrenzfläche sammelt bzw. dort entweichen kann.

Sobald die gewünschte Dicke des Teilstückes 19 der Eisfigur 20 erreicht ist, wird der Sprühvorgang unterbrochen und die Formvorrichtungen durch kurzzeitiges Erwärmen der Kühlschlangen 17 erwärmt, so daß das Teilstück 19 an seiner den Kühlflächen 16 zugewandten Oberfläche 22 leicht antaut und sich hierdurch von der fein ziselierten Kühlfläche 16 ablöst. Durch das kurzzeitige Erwärmen der Kühlschlangen 17 wird die Oberfläche 22 des Teilstücks 19 verfeinert, da keine Teile der.Teilstücke 19 an den Kühlflächen 16 hängenbleiben, so daß für die Routineherstellung eine Nachbearbeitung der Oberfläche 22 des Teilstücks 19 entfällt.

Ein solches Teilstück 19 mit einer der Ziselierung 23 der Kühlfläche 16 entsprechenden feinen Oberflächenziselierung 23a einer Eisfigur 20 ist in Fig. 5 gezeigt. Zwei solche Teilstücke 19 einer Eisfigur werden an ihrer unteren freien Oberfläche 24 beispielsweise auf einer Heizplatte plan angetaut und mit den durch das Antauen benetzten freien Oberflächen 24 so zusammengefügt, daß sich eine einheitliche Eisfigur ergibt, wenn die zusammengefügten Teilstücke 19 erneut unter den Gefrierpunkt des Wassers abgekühlt werden.

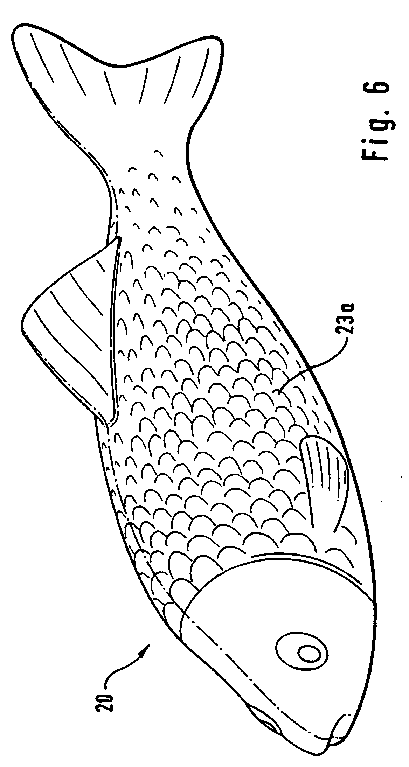

Eine solche einheitliche Eisfigur, im Beispielsfalle die Nachbildung eines Fisches in Klareis, zeigt die Fig. 6.

Da bei der Ausbildung von komplexen Formen der Teilstücke 19 einer Eisfigur aufgrund der verschiedenen Tiefe der negativen Form des Teilstückes 19 in der Kühlfläche 16 unterschiedliche Kälteleistungen erforderlich sind, ist die Kälteleistung variabel einstellbar. Dies kann einerseits dadurch geschehen, daß verschiedene Bereiche innerhalb der Formvorrichtung mit unterschiedlich vielen Kühlschlangen 17 ausgestattet sind oder es werden andererseits getrennt regelbare und mit verschiedenen Kühlmittelkreisläufen verbundene Kühlschlangen 17 verwendet.

Typischerweise beginnt die Absenkung der Temperatur des gesamten Kälteraumes einschließlich der formgebenden, konkaven Kühlflächen 16 zu Anfang der Gefrierphase bei einer Temperatur von -10°C in dem Kühlmittelkreislauf 12 und wird im Laufe des Gefrierprozesses auf minimal -40°C abgesenkt. Dieser mit zunehmender Zeit absinkende Temperaturgradient kann entweder manuell oder vorzugsweise elektronisch gesteuert werden.

Um die Gleichmäßigkeit der Füllung der Formvorrichtung 15 an Stellen unterschiedlicher Tiefe noch weiter zu verbessern, kann außerdem die Einspritzleistung der Düsenöffnungen 9 variiert werden. Bei Bedarf können auch anders geformte bzw. anders angeordnete Düsenöffnungen 9 in die Oberfläche 8 des Vorratsbehälters 2 eingesetzt werden.

In der Regel werden mehrere Formvorrichtungen 15 an der Unterseite 14 des Blockes 13 angebracht, so daß in einem Arbeitsgang mehrere Teilstücke 19 von unter Umständen verschiedenen Eisfiguren 20 hergestellt werden können.Um zu verhindern, daß sich zwischen den Kühlflächen eine Eisschicht bildet, werden die gegebenenfalls zwischen den Formvorrichtungen 15 entstehenden Zwischenräume mit in der Zeichnung nicht angegebenen Kunststoffteilen abgedeckt.

Zur Herstellung von Teilstücken, die Hinterschneidungen aufweisen, werden geteilte Formvorrichtungen verwendet, deren Teile getrennt abnehmbar sind, so daß die an der ebenfalls geteilten Kühlfläche gebildeten Teilstücke trotz ihrer Hinterschneidungen leicht entformt werden können. Bei dieser Formvorrichtung sind die Kühlschlangen 17 selbstverständlich so angeordnet, daß jedes Teil der Formvorrichtung mit einer eigenen Kühlmittelversorgung ausgestattet ist.

Auch wenn die Formvorrichtung 15 geteilt ist, können die einzelnen Teile der Formvorrichtung je nach ihrem Kühlleistungsbedarf durch eine unterschiedliche Windungszahl pro Volumeneinheit bzw. pro Flächeneinheit gekühlt werden.

Mit dem erfindungsgemäßen Verfahren können beliebige Formen, seien es Tierfiguren, Eisgläser, Eiswürfel usw, vorzugsweise aus Klareis, hergestellt werden.

Weiterhin besteht die Möglichkeit, die Teilstücke 19 auch allein als Dekorationsobjekt, beispielsweise zu einer Anordnung auf einem Teller bzw. einer Platte auf einer festlich gedeckten Tafel mit ihren plangeschmolzenen Oberflächen 24 zu verwenden.

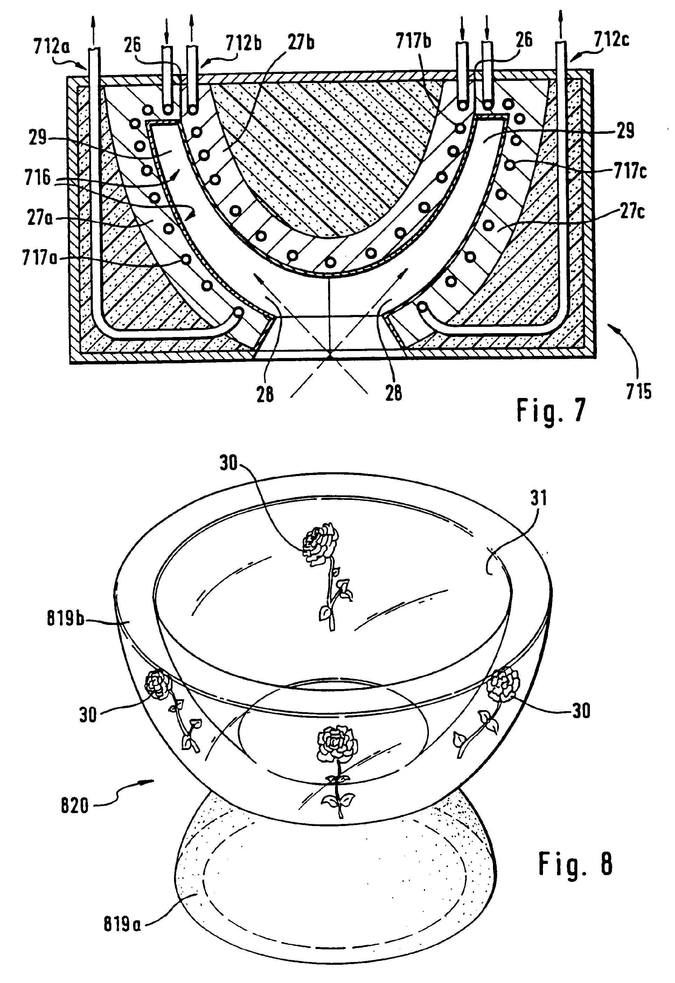

In Fig. 7 ist mit 715 eine an den Stellen 26 teilbare Formvorrichtung bezeichnet. Sämtliche Bezugszeichen, auf die im nachfolgenden Text nicht näher eingegangen wird, haben bei vorgestellter 7 die analoge Bedeutung wie in den zuvor beschriebenen Ausführungsformen.

Die in Fig. 7 gezeigte Formvorrichtung 715 wird über drei unabhängige Kühlmittelkreisläufe 712a, 712b, 712c gekühlt. Zweckmäßigerweise werden die Innenräume 27a, 27b, 27c der Formvorrichtung 715 mit einem wärmeisolierenden Material ausgeschäumt, so daß die angelegte Kälteleistung im wesentlichen im Bereich der Kühlfläche 716 zur Verfügung gestellt wird.

Die Beaufschlagung mit Wasser erfolgt in Richtung der in Fig. 7 gestrichelt gezeigten Pfeile. Damit im Öffnungsbereich 28 der Kühlfläche 716 kein vorzeitiges Frieren des beaufschlagten Wassers erfolgt, nimmt die Dichte der Kühlschlangen 717a, 717b, 717c im hinteren Bereich 29 der Kühlfläche 716 zu.

Nach dem vollständigen Frieren eines der Formvorrichtung 715 entsprechenden Teilstückes in Form einer Schale wird die Formvorrichtung 715 über die Rühlkreislaufe 712a, 712b, 712c einige Grad über 0°C erwärmt, so daß an der Kühlfläche 716 ein kleiner Tauwasserspalt entsteht und sich hierdurch das der Formvorrichtung 715 entsprechende Teilstück einer Eisfigur von der Kühlfläche 716 ablöst.

Da das in der Formvorrichtung 715 gebildete Teilstück einer Eisfigur Hinterschneidungen aufweist, muß die Formvorrichtung 715 an den dafür vorgesehenen Stellen 26 geteilt werden, so daß sich das in der Formvorrichtung 715 gebildete Teilstück entformen läßt.

Derart gebildete schalenförmige Teilstücke einer Eisfigur weisen an ihrer an der Kühlfläche 716 gelegenen Oberfläche exakte Maßhaltigkeit und Beschaffenheit der Kühlflächen 716 auf.

Die mit der Formvorrichtung 715 gebildeten schalenförmigen Teilstücke können an ihrem unteren Ende plan angeschmolzen, zusammengefügt und unter den Gefrierpunkt des Wasser gekühlt werden, so daß sich eine pokalförmige Eisfigur mit einer einem schalenförmigen Teilstück, welches in umgedrehter Position als Fuß der pokalförmigen Eisfigur dient und einem ebenfalls schalenförmigen Oberteil gebildet werden.

Dabei muß das Anschmelzen der schalenförmigen Eiskörper auf einer Heizplatte nicht die ganze Fläche erfassen, sondern sie kann zum Beispiel ringförmig ausgebildet sein, insbesondere wenn zur mechanischen Stabilisierung noch Zapfen-Lochverbindungen zwischen beiden Teilstücken vorgesehen sind. Jedoch ist in der Regel eine solche Zapfen-Lochverbindung nicht notwendig, da ausreichende Haltwirkungen auch ohne mechanische Verankerungen erzielbar sind.

Die zusammengefügte Eisfigur 820 gemäß Fig. 8 weist ein obereres Teilstück 819b aus Klareis auf, in welchem Einschlußkörper 30, im Ausführungsbeispiel Rosen, angeordnet sind und ein unteres schalenförmiges Teilstück 819a, welches aus Trübeis besteht.

Solche schalenförmige Teilstücke 819a, 819b werden, obgleich sie mit den gängigen Sprüh- und Schleuderverfahren hergestellt werden können, in der Regel mit Hilfe von konventionellen Kühlkörpern auf Glykolbasis mit konvexen Kühlflächen durch Eintauchen in Wasser hergestellt.

Dieses Verfahren ist deshalb besonders geeignet, um schalenförmige Teilstücke 819a, 819b herzustellen, weil es bei diesem Verfahren besonders leicht ist, Klareis bzw. Trübeis herzustellen; nämlich dann, wenn das die konvexe Kühlfläche umspülende Wasser bewegt wird, bildet sich eine von der Kühlfläche wegwachsende Eisschicht aus Klareis, da Gaseinschlüsse des Wassers sich an der Phasengrenze zwischen Eis und Wasser anreichern und durch die Konvektion ständig aus der Phasengrenzfläche entfernt werden. Wird dagegen Trübeis gewünscht, so braucht lediglich das Wasser, in welches der Kühlkörper mit der konvexen Kühlfläche eintaucht, nicht bewegt zu werden, so können die Gaseinschlüsse nicht aus der Gefrierfront entfernt werden, und es bildet sich ein weiß erscheinendes trübes Eis aus.

Die Einschlußkörper 30 im schalenförmigen Teilstück 819b werden dadurch eingeschlossen, daß im Beispielsfalle ein Glykol-gekühlter Kühlkörper in Wasser eingetaucht wird und nach einer definierten Zeit aus dem Wasser gehoben wird, während die Kühlung weiterläuft, wobei eine Abtrocknung der bereits gebildeten Eisschicht erfolgt, dann wird vom Personal ein Einschlußkörper, im Ausführungsbeispiel eine Rose, mit einem Haftvermittler, im Ausführungsbeispiel Wasser, benetzt und auf der Oberfläche der stark unterkühlten Eisschicht angeheftet. Dann wird der Kühlkörper mit der daran haftenden Eisschicht und der darauf angehefteten Einschlußkörper wieder in das Wasserbad abgesenkt, wobei das Wasser zur Klareisbildung bewegt werden muß und nach einer gewissen Zeit, wenn die gewünschte Wandstärke des schalenförmigen Teilstücks 819b erreicht ist, der Kühlkörper mit dem daran haftenden Teilstück 819b mit Einschlüssen 30 aus dem Wasser gehoben, und der Kühlkörper einige wenige Grade über Null erwärmt wird, so daß die innere Oberfläche 31 des Teilstücks 819b leicht antaut und sich ein Tauwasserspalt zwischen der Kühlfläche des Kühlkörpers und dem Teilstück 819b ausbildet. Sobald aufgrund des Eigengewichts des Teilstücks 819b Luft in diesen Tauwasserspalt eingezogen wird, kann das Teilstück 819b vom Kühlkörper durch manuelles Abziehen oder durch automatisiertes Abstreifen mittels eines dafür geeigneten Abstreifers erfolgen.

Die innere Oberfläche 31 des Teilstücks 819b ist immer exakt maßhaltig mit der Kühlfläche des verwendeten Kühlkörpers.

An solchen durch Kühlkörper hergestellten Teilstücken 819b, 819a können auch ringsum verlaufende kontinuierliche bzw. diskontinuierliche Abstufungen dadurch erreicht werden, daß der Verdampferkühlstab mit seinem daran haftenden Teilstück nur zum Teil aus dem Wasser herausgezogen wird und an dem noch im Wasser verbleibenden Teil weiter Eis niedergeschlagen wird, so daß sich eine in der Dicke kontinuierliche bzw. diskontinuierliche ringsum verlaufende Abstufung ausbildet.

Selbstverständlich können derart erzielte Abstufungen je nach Wunsch aus dekorativen bzw. stilistischen überlegungen heraus je nach Wunsch aus Klareis bzw. Trübeis unabhängig von der Eisart des restlichen Teilstückes hergestellt werden.

Die so hergestellten Eisfiguren 20, 820 können in großen Serien hergestellt werden, da beispielsweise die Gefrierzeit für eine vier Liter fassende Formvorrichtung 15, 715 pro Teilstück 19, 819a, 819b ca. 25 Minuten beträgt.

Ferner kann der Gefrierprozeß zu jeder Zeit und in jeder Phase gestoppt bzw. korrigiert werden. Während des Unterbrechens des Gefrierprozesses können beispielsweise mit Wasser als Haftvermittler benetzte Einschlüsse wie Blumen, Meeresfrüchte usw. oder vorgefrorene Anordnungen solcher Einschlüsse in die Teilstücke 19, 819a, 819b einer Eisfigur 20, eingebracht werden, wenn der Gefrierprozeß anschließend soweit fortgesetzt wird, bis sich vollausgebildete Teilstücke 19, 819a, B19b gebildet haben.

Hinsichtlich der Art der Einschlüsse sowie der verschiedenen Möglichkeiten des Einbringens von Einschlüssen in einer Eisfigur 20, 820 aus Klareis bzw. Klareis und Trübeis darf vollinhaltlich auf die Patentanmeldungen DE-A-39 09 318 und DE-A-39 09 317 Bezug genommen werden.

Sollten die feinen Oberflächenziselierungen 23a der Eisfigur 20 nicht ausreichen, so bereitet es keine Schwierigkeiten, diese mit den verschiedensten für die Eisgestaltung üblichen Werkzeugen, etwa einem lötkolbenähnlichem Gerät, nachzuarbeiten. Mit einem solchen Werkzeug können auch auf glatten Oberflächen der Teilstücke 19, 819a, 819b Oberflächenziselierungen angebracht werden. Insbesondere können solche Oberflächenziselierungen auch auf den oberen Rändern der Teilstücke 19, 819a, 819b angebracht werden.

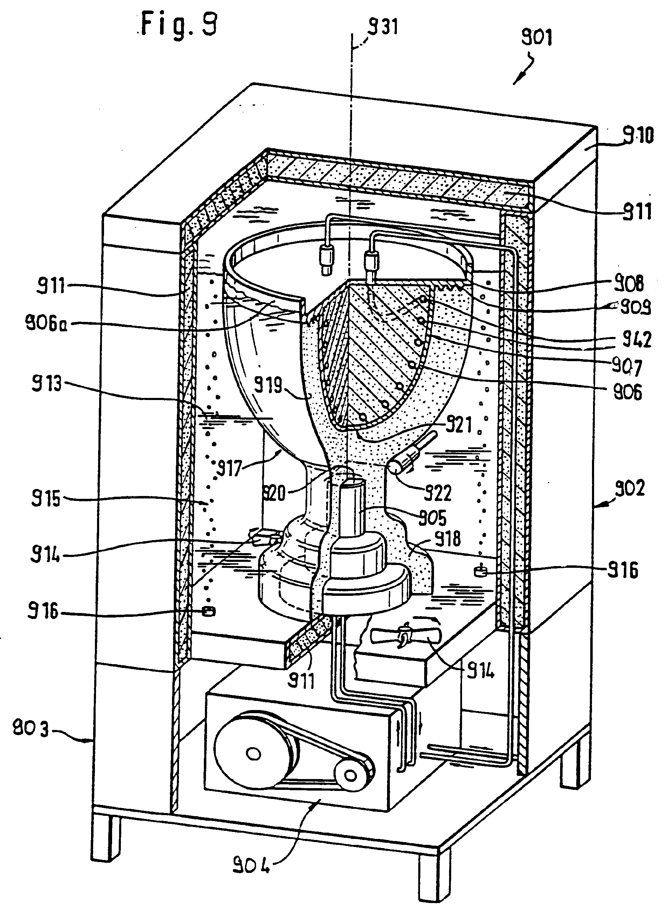

In Fig. 9 ist mit 901 eine Vorrichtung zur Herstellung von einstückigen Eisfiguren bezeichnet. Die Vorrichtung umfaßt einen Behälter 902, in dessen unterem Teil 903 ein Kältekompressor 904 eingebaut ist. Der Kältekompressor 904 versorgt die vertikal koaxial angeordneten Kühlkörper 905 und 906 mit Kältemittel, so daß die Kühlkörper auf eine Temperatur, die unterhalb des Gefrierpunkts des Wassers liegt, abgekühlt werden.

Der obere Kühlkörper 906 weist in seinem oberen Teil 907 einen ringsum verlaufenden Rand 908 auf, der thermisch leitend mit dem Kühlkörer 906 verbunden ist und der mit im Querschnitt dreieckförmigen ringförmig umlaufenden Vorsprüngen 909 besetzt ist.

Der Behälter 902 weist einen Deckel 910 auf, der den Behälter 902 gegenüber der Umgebung thermisch abschirmt. Hierzu enthalten der Deckel 910 sowie die übrigen Wände des Behälters 902 eine Isolierschicht 911.

Zur Herstellung einer einstückigen Eisfigur 912 in Form eines Pokals wird der Behälter 902 mit Wasser 913 derart gefüllt, daß der Kühlkörper 905 vollständig und der Kühlkörper 906 nicht über seinen Rand 906a hinaus mit Wasser 913 bedeckt sind. Das Wasser 913 in dem Behälter 902 wird beispielsweise über Propellerrührer 914 in Bewegung gehalten und/oder über Luftströme 915, die aus Luftausströmern 916 stammen, durchperlt. Falls nur mit Durchperlung gearbeitet wird, ist selbstverständlich eine Vielzahl von Luftausströmern 916 notwendig. Das Bewegen sowie das Durchperlen des Wassers 913 mit Luft 915 hat die Aufgabe, Gaseinschlüsse, insbesondere Lufteinschlüsse sowie andere Verunreinigungen, die sich an der wachsenden Gefrierfront also der Phasengrenze 917 Eis/Wasser ansammeln, aus dem Eis/Wasser-Gleichgewicht der Phasengrenze 917 zu entfernen, so daß das Eis im wesentlichen transparent ist, zumindest jedoch transluzent ist.

Im Verlauf der Bildung von Eisschichten 918 und 919 um die Kühlkörper 905 und 906 wachsen diese von Kühlflächen und 921 der Kühlkörper 905 und 906 weg und damit aufeinander zu, solange bis sie einander berühren, dadurch miteinander verfrieren und damit eine einstückige Eisfigur 912 bilden.

Der Zeitpunkt der Fertigstellung der einstückigen Eisfigur 912 wird von einem Sensor 922 an eine nicht näher beschriebene Signalverarbeitungselektronik weitergeleitet, die den Zeitpunkt der Fertigstellung der einstückigen Eisfigur 912 dem Bedienungspersonal durch ein akustisches Signal meldet.

Der Sensor wird von einer sich mit einer definierten Drehzahl drehenden Walze 922 gebildet, welche an vorbestimmter Position entsprechend einer dort gewünschten Eisstärke angebracht wird und welche in ihrer Rotationsbewegung gehemmt wird, wenn die beiden Eisschichten 918 und 919 sich berühren, bzw. miteinander verfroren sind.

Ferner kann bei Bedarf die Kühlleistung des oberen Kühlkörpers 906 unabhängig von der Kühlleistung die den unteren Kühlkörper 905 versorgt, geregelt werden.

Durch die vertikal koaxiale Anordnung der Kühlkörper 905 und 906 bezüglich einer vertikalen Achse 931 wird die einstückige Eisfigur 912 bezüglich der Achse 931 zumindest annähernd rotationssymmetrisch ausgebildet.

Wenn der Gefrierprozeß beendet ist, werden die Kühlkörper 905 und 906 kurzzeitig erwärmt, so daß sich die einstückige Eisfigur 912 von den Kühlflächen 920 und 921 der Kühlkörper 905 und 906 ablöst. Dann wird der obere Kühlkörper 906 nach oben abgenommen und anschließend wird die einstückige Eisfigur 912 vom unteren Kühlkörper 905 abgezogen.

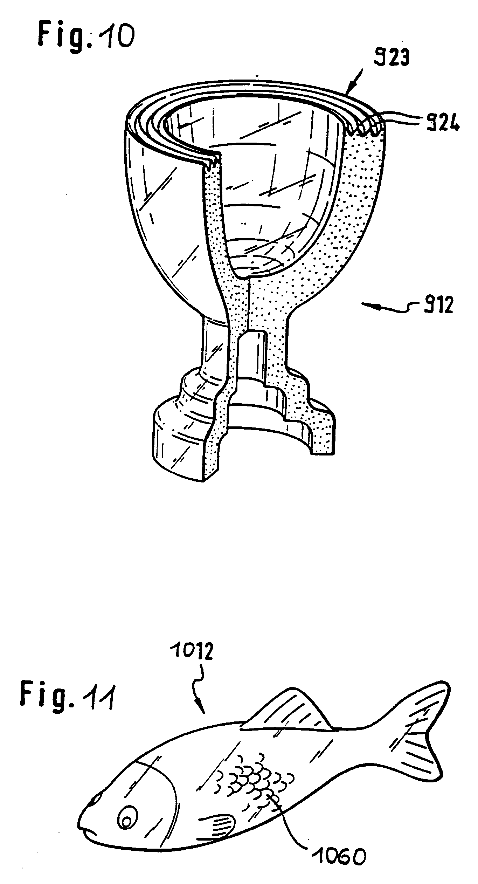

Die dann zur Verfügung stehende einstückige Eisfigur 912 gemäß Fig. 10 weist an ihrem oberen Rand 923 Rillen 924 auf, die den ringförmig umlaufenden Vorsprüngen 909 mit dreieckförmigem Querschnitt des Kühlkörpers 906 komplementär sind.

Eine solche einstückige Eisfigur 912 kann im Bereich der gehobenen Gastronomie zur Kühlung von Speisen und/oder Getränken verwendet werden.

Auch können Einschlüsse beliebiger Art durch Unterbrechen des Gefrierprozesses nach Ausbilden einer ersten Eisschicht und Anbringen von Einschlüssen auf der Oberfläche einer ersten gebildeten Eisschicht angebracht werden und diese durch Fortsetzen des Gefrierprozesses im Inneren der einstückigen Eisfigur eingeschlossen werden. Insoweit ist einleitend auf die Patentanmeldungen DE-A-39 09 318, 39 09 317 und 39 09 316 vom 21.03.1989 verwiesen.

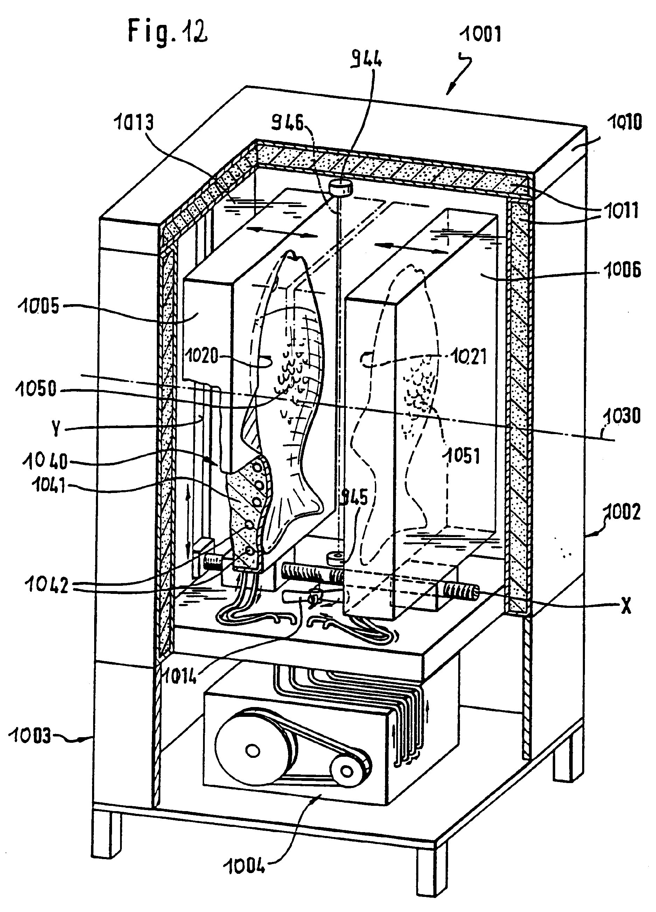

Fig. 11 zeigt das Ausführungsbeispiel einer Vorrichtung 1001, wobei in der folgenden Beschreibung entsprechende Bauteile mit gleichen Bezugszeichen wie beim Ausführungsbeispiel gemäß Fig. 9, jedoch erhöht um 100, bezeichnet und nur soweit nochmals erläutert sind, als Abweichungen zu Fig. 9 erläuterungsbedürftig sind. Bei der Ausführung gemäß Fig. 11 sind die Kühlkörper 1005 und 1006 horizontal koaxial entlang einer Achse 1030 angeordnet. Die Kühlflächen 1001 und 1021 der als Hohlform ausgebildeten Kühlkörper 1005 und 1006 sind in dem in Fig. 11 gezeigten Ausführungsbeispiel konkav ausgebildet und weisen je die Form eines halben Fisches auf. Ferner sind die Kühlkörper 1005 und 1006 als Formvorrichtungen ausgebildet, deren Innenräume 1070 zweckmäßigerweise mit einem wärmeisolierenden Material 1041 ausgeschäumt sind, so daß die angelegte Kälteleistung im wesentlichen im Bereich der Kühlflächen 1001 und 1021 zur Verfügung gestellt wird. Ferner weisen die Formvorrichtungen in ihrem Inneren 1040 Kühlschlangen 1042 auf, die je nach ihrem Kühlleistungsbedarf eine unterschiedliche Windungszahl pro Volumeneinheit bzw. pro Flächeneinheit aufweisen. Hierdurch wird gewährleistet, daß das Wasser 1013 an den Kühlflächen 1001 und 1021 in einer den Seitenwänden des Behälters 1002 nahezu parallelen Front gefriert, so daß zwei im wesentlichen parallele Fronten, die senkrecht auf der Achse 1030 stehen und entlang der Achse 1030 aufeinander zuwachsen und sich schließlich zwischen den beiden Kühlkörpern 1005 und 1006 berühren, so daß eine einstückige Eisfigur 1012, im Beispielsfalle in Form eines Fisches, gebildet wird. Dabei ist eine leicht konvexe oder ballige freie Oberfläche anzustreben, um ein fortschreitendes Zusammenwachsen der Fronten von innen nach außen zu gewährleisten und Wassereinschlüsse mit Verunreinigungen in der Berührungszone auszuschließen.

Die Fertigstellung der gebildeten einstückigen Eisfigur 1012 kann in diesem Falle beispielsweise durch optoelektronische Bauelemente 944, 945 erfaßt werden. Hierbei sendet ein optischer Sender 944 entlang einer Achse 946, die senkrecht auf der Horizontalachse 1030 steht und die in der Spiegelebene der Kühlkörper 1005 und 1006 liegt, Licht aus, welches von dem optischen Empfänger 945 aufgenommen und einer in der Figur nicht näher bezeichneten elektronischen Auswerteeinheit zugeführt wird. Wenn nun die Eiszonen der in Fig. 11 linken Kühlfläche 1020 und die Eiszone der in Fig. 11 rechten Kühlfläche 1021 sich in der Spiegelebene treffen, so wird der Lichtweg in dieser Zone gestört, diese Störung von der Auswertevorrichtung erfaßt, wobei diese nach einer gewissen zeitlichen Verzögerung ein Signal liefert, welches ein akustisches Signal an das Bedienungspersonal ist oder welches zur weiteren automatischen Prozeßsteuerung ausgenutzt werden kann. So kann beispielsweise die Auswertevorrichtung die Kühlschlangen 942 kurzzeitig mit einem Wärmemedium füllen, so daß sich die einstückige Eisfigur 1012 von den Kühlflächen 1020 und 1021 ablöst und dann herausgenommen werden kann.

Zweckmäßigerweise werden die Kühlkörper 1005 und 1006 an einem beweglichen XY-Gestänge befestigt, so daß zum einen der Abstand der Kühlkörper 1005 und 1006 voneinander auf einen bestimmten Wert eingestellt werden kann, und zum anderen die Eisfigur in Y-Richtung mit dem Gestänge herausgefahren werden kann, so daß bei Verschieben der Kühlkörper 1005 und 1006 voneinander weg die einstückige Eisfigur 1012 bequem herausgenommen werden kann.

Der Vorteil, konkave Kühlflächen 1020 und 1021 zu verwenden, liegt darin begründet, daß die Kühlflächen 1020 und 1021 feine Oberflächenziselierungen 1050 und 1051 aufweisen, die sich nahezu exakt, natürlich komplementär auf die Oberfläche der einstückigen Eisfigur 1012 übertragen, so daß es mit Kühlkörpern 1005 und 1006, die konkave Kühlflächen 1020 und 1021 aufweisen, möglich ist, eine einstückige Eisfigur 1012 mit sehr guten Oberflächenqualitäten und gegebenenfalls Oberflächenziselierungen 1060 zu erhalten, so daß eine Nachbearbeitung der Oberfläche der einstückigen Eisfigur 1012 in der Regel entfallen kann.

Für weitere Einzelheiten solcher Kühlkörper 1005 und 1006 mit konkaven Kühlflächen 1020 und 1021 ist insoweit einleitend auf die DE-A-39 09 316 vom 21.03.1989 verwiesen.

Sollte sich in der Berührungszone der aufeinander zugewachsenen Eisschichten aufgrund der in dieser Zone verstärkt eingebrachten Kühlleistung eine Wulst bilden, so kann diese ohne weiteres und schnell beispielsweise mit einem lötkolbenähnlichem Werkzeug nachbearbeitet werden.

Sowohl mit dieser horizontalen als auch mit der vertikalen Kühlkörperanordnung können komplexe einstückige Eisfiguren 1012 in relativ großen Stückzahlen serienmäßig gefertigt werden.

Weiterhin denkbar ist auch die Verwendung einer Kombination von vertikaler mit horizontaler und/oder einer hinsichtlich der Schwerkraftrichtung schiefwinkligen Kühlkörperanordnung.

Wie die vorstehende Beschreibung veranschaulicht, zeichnen sich die erfindungsgemäßen Verfahren zur Herstellung von Eisfiguren dadurch aus, daß sehr schnell, sicher, preisgünstig und ohne künstlerische Begabung bliebige Eisfiguren, sowohl in Klareis als auch in Kombination von Klareis und Trübeis, wahlweise auch mit Einschlüssen beliebiger Art in größeren Serien als bislang möglich, hergestellt werden können.

## Patentansprüche

1. Verfahren zur Herstellung von Eisfiguren gegfs. aus Klareis, zu Zier- und Dekorationszwecken,
**dadurch gekennzeichnet, daß**
je Eisfigur (20) mindestens zwei Teilstücke (19) in einer unter den Gefrierpunkt des Wassers gekühlten, insbesondere konkaven, Kühlfläche (16) dadurch gebildet werden, daß gegfs. bewegtes Wasser in einer Überschußmenge mit der Kühlfläche (16) in Kontakt gebracht wird und zum Teil daran derart erstarrt, daß die sich bildende Eisschicht von der Kühlfläche (16) weg wächst; und
daß die Teilstücke (19) von der Kühlfläche getrennt und an mindestens einem Teil der freien Oberfläche (24) plan angetaut und mit den angetauten Oberflächen zusammengefügt werden, und das Tauwasser gegebenenfalls mit zusätzlichem Wasser als Haftvermittler erneut unter den Gefrierpunkt des Wassers abgekühlt wird, so daß sich einstückige Eisfiguren (20) mit in ihrem Inneren liegenden, vormals freien Oberflächen (24) der Teilstücke (19) ergeben.

2. Verfahren nach Anspruch 1, dadurch gekennzeichnet, daß zur Bildung von Teilstücken (19) mit Hinterschneidungen, und mithin einander gegenüberliegenden in Kontakt mit der Kühlfläche stehenden Oberflächenelementen, eine geteilte Kühlfläche (16) verwendet wird.

3. Verfahren nach Anspruch 1, dadurch gekennzeichnet, daß die Kühlleistung für die Kühlfläche (16) entsprechend dem örtlichen Kühlbedarf lokal unterschiedlich feinreguliert wird.

4. Verfahren nach Anspruch 1, dadurch gekennzeichnet, daß die Teilstücke (19) nach kurzzeitiger Erwärmung der Kühlflächen (16) entformt werden.

5. Verfahren nach Anspruch 1, dadurch gekennzeichnet, daß der Eisbildungsvorgang vor Erreichen der gewünschten Dicke der Eisschicht des Teilstückes (19) dadurch unterbrochen wird, daß der Kontakt der eisbedeckten Kühlfläche (16) mit weiterem Wasser unterbrochen wird;
daß das an der Kühlfläche anhaftende Wasser vorzugsweise durch fortgesetzte Kühlung der Kühlfläche (16) in Eis überführt wird und die Eisfläche so abgetrocknet und gegebenenfalls unterkühlt wird, daß ein gegebenenfalls trockener, insbesondere biologisches, vorzugsweise eßbares, Material enthaltender, Einschlußkörper kurz vor der Abtrocknung der Eisfläche oder ein mit einem vorzugsweise vorgekühlten Haftvermittler, insbesondere Wasser, benetzter Einschlußkörper nach der Abtrocknung und gegebenenfalls Unterkühlung der Eisfläche mit dieser in Kontakt gebracht und dort angeheftet wird; und
daß anschließend die Eisfläche mit dem daran gehefteten Einschlußkörper erneut in Kontakt mit weiterem Wasser gebracht und der Eisbildungsvorgang unter Einschluß des Einschlußkörpers fortgesetzt wird.

6. Verfahren zur Herstellung von Eisfiguren, gegfs. aus Klareis, mit Hilfe von Kühlkörpern, die mit einer Kühleinrichtung in Verbindung stehen,
dadurch gekennzeichnet,
daß wenigstens zwei Kühlkörper, die im wesentlichen einander gegenüberliegend mit einem offenen Spalt dazwischen, insbesondere mit variierbarem Abstand, angeordnet werden, mit gegfs. bewegtem Wasser in Kontakt gebracht werden, so daß an jedem Kühlkörper eine von dem Kühlkörper wegwachsende Eisschicht gebildet wird, wobei die Eisschichten aufeinander zuwachsen;
daß so lange gekühlt wird, bis durch gegenseitiges Berühren der Eisschichten eine einstückige Eisfigur gebildet wird, wobei die aufeinander zuwachsenden Eisschichten den Abstand zwischen den Kühlkörpern überwinden;
daß die Fertigstellung der einstückigen Eisfigur erfaßt wird und daß die einstückige Eisfigur nach erfolgter Fertigstellung von den Kühlkörpern abgelöst wird.

7. Verfahren nach Anspruch 6, dadurch gekennzeichnet, daß der gegenseitige Abstand und/oder die Kühlleistung und/oder die Ein- und Ausschaltzeitpunkte der Kühlkörper nach Bedarf variiert wird.

8. Verfahren nach Anspruch 6, dadurch gekennzeichnet, daß die Fertigstellung der einstückigen Eisfigur durch einen Sensor und/oder elektronische Bildauswertung erfaßt wird.

9. Verfahren nach Anspruch 1 oder 6, dadurch gekennzeichnet, daß als Kühlkörper konventionelle Kühlkörper auf Verdampfer-, bzw. auf Flüssigkältemittel-, vorzugsweise auf Glykolbasis, verwendet werden.

10. Verfahren nach Anspruch 1 oder 6, dadurch gekennzeichnet, daß Kühlkörper in koaxialer Anordnung und/oder mit konvexer und/oder konkaver Kühlfläche verwendet werden.

11. Verfahren nach Anspruch 1 oder 6, dadurch gekennzeichnet, daß die Kühlkörper mit Wasser durch Eintauchen, Sprühen oder ähnliches in Kontakt gebracht werden.

12. Verfahren nach Anspruch 1 oder 6, dadurch gekennzeichnet, daß die gebildeten, insbesondere weitgehend aus Klareis bestehenden, Eisfiguren die Form von insbesondere glasanalogen Zier- und/oder Gebrauchsgegenständen, vorzugsweise Pokale, Schalen, Gläser usw., aufweisen.

13. Vorrichtung zur Herstellung wenigstens eines Eisfiguren-Teilstücks (19) gegfs. aus Klareis in einer unter den Gefrierpunkt des Wassers gekühlten, insbesondere konkaven Kühlfläche (16) gemäß dem Verfahren des Anspruchs 1, dadurch gekennzeichnet, daß
an der der Wasserbeaufschlagung abgewandten Rückseite (18) der Kühlfläche (16) Kühlschlangen (17), vorzugsweise Verdampferrohre mit der Kühlfläche (16) in wärmeleitender Verbindung stehen; und daß
die Anordnungsdichte der Kühlschlangen (17) entsprechend der örtlich gewünschten Kühlleistung, der örtlichen Dicke der zu bildenden Eisschicht für das Teilstück (19) variiert, damit eine einheitlich wachsende Gefrierfront gebildet wird.

14. Vorrichtung zur Herstellung von Eisfiguren gegfs. aus Klareis mit Kühlkörpern, insbesondere auf Verdampfer- bzw. auf Flüssigkältemittel-, vorzugsweise auf Glykolbasis, die mit einer Kühleinrichtung in Verbindung stehen, gemäß dem Verfahren des Anspruchs 6,
**dadurch gekennzeichnet**,
daß mindestens zwei Kühlkörper (905, 906) mit einem offenen Spalt dazwischen im wesentlichen einander gegenüberliegend angeordnet sind;
daß die Kühlkörper (905, 906) geeignet sind, um mit gegfs. bewegtem Wasser in Kontakt gebracht zu werden, so daß sich Eisschichten daran bilden, die aufeinander zuwachsen und bei Berührung eine einstückige Eisfigur (912, 1012) bilden und
daß Einrichtungen vorgesehen sind, um die Fertigstel lung der einstückigen Eisfigur (912, 1012) zu erfassen.

15. Vorrichtung nach Anspruch 14, dadurch gekennzeichnet, daß die Einrichtungen zum Erfassen der Fertigstellung der einstückigen Eisfigur (912, 1012) Sensoren (944, 945) und/oder Einrichtungen zur elektronischen Bildauswertung umfassen.

16. Vorrichtung nach Anspruch 15 oder 14, dadurch gekennzeichnet, daß die Kühlkörper koaxial angeordnet sind und/oder konvexe und/oder konkave Kühlflächen (16; 920, 921) aufweisen.

17. Vorrichtung nach einem der Ansprüche 14 bis 16, dadurch gekennzeichnet, daß Einrichtungen, insbesondere Konvektionseinrichtungen (916, 914), zur Klareisbildung vorgesehen sind.

## Claims

1. A process for the production of ice figures, from transparent ice if required, for ornamental and decorative purposes, characterised in that at least two component parts (19) are formed for each ice figure (20) in a cooling surface (16), more particularly a concave cooling surface, which is cooled to below the freezing point of water, said component parts (19) being formed by bringing an excess quantity of water, in movement if required, into contact with the cooling surface (16), the water partly solidifying thereon in such manner that the layer of ice forming grows away from the cooling surface (16); and
in that the component parts (19) are separated from the cooling surface and are thawed so as to be flat at least at a part of the free surface (24) and are joined by the thawed surfaces, and the resulting water from the thawing is again cooled below the freezing point of the water, additional water being used if required as a coupling agent, so that one-piece ice figures (20) form with the formerly free surfaces (24) of the component parts (19) situated in the interior of said figures.

2. A process according to claim 1, characterised in that a divided cooling surface (16) is used for the purpose of forming component parts (19) having undercut portions, and therefore oppositely situated surface elements in contact with the cooling surface.

3. A process according to claim 1, characterised in that the cooling power for the cooling surface (16) is finely controlled so as to vary locally according to the local cooling requirements.

4. A process according to claim 1, characterised in that the component parts (19) are released from the mould after brief heating of the cooling surfaces (16).

5. A process according to claim 1, characterised in that the ice forming operation is interrupted before the required thickness of the layer of ice of the component part (19) is reached, interruption being effected by interrupting the contact of the ice-covered cooling surface (16) with additional water;
in that the water adhering to the cooling surface is converted to ice preferably by continued cooling of the cooling surface (16) and the ice surface is so dried and, if required, supercooled that an included member, which is dry if required and which contains, in particular, biological, preferably edible, material is brought into contact with the ice surface and affixed thereto just before the ice surface is dried or else an included member wetted with a preferably precooled coupling agent, more particularly water, is brought into contact with the ice surface and affixed thereto after drying and, if required, supercooling; and
in that the ice surface with the included member affixed thereto is again brought into contact with additional water and the ice forming operation is continued with the inclusion of the included member.

6. A process for the production of ice figures, from transparent ice if required, using cooling members connected to a cooling means, characterised in that
at least two cooling members, which are disposed substantially opposite one another with an open gap therebetween, more particularly at a variable distance, are brought into contact with water, in movement if required, so that an ice layer growing away from the cooling member is formed on each such cooling member, the ice layers growing towards one another;
in that cooling is continued until a one-piece ice figure is formed by the ice layers coming into mutual contact, the distance between the cooling members being overcome by the ice layers growing towards one another;
in that the completion of the one-piece ice figure is detected and the one-piece ice figure is released from the cooling members after completion.

7. A process according to claim 6, characterised in that the mutual distance and/or cooling power and/or times of switching the cooling members on and off are varied as required.

8. A process according to claim 6, characterised in that the completion of the one-piece ice figure is detected by a sensor and/or electronic image evaluation.

9. A process according to claim 1 or 6, characterised in that the cooling members used are conventional cooling members on an evaporator or liquid refrigerant basis, preferably on a glycol basis.

10. A process according to claim 1 or 6, characterised in that cooling members are used in a coaxial arrangement and/or with a convex and/or a concave cooling surface.

11. A process according to claim 1 or 6, characterised in that the cooling members are brought into contact with water by immersion, spraying or the like.

12. A process according to claim 1 or 6, characterised in that the ice figures formed and consisting more particularly extensively of transparent ice have the form of, more particularly, glass-like decorative and/or utility articles, preferably goblets, dishes, glasses etc.

13. Apparatus for the production of at least one component part (19) of an ice figure, from transparent ice if required, in a cooling surface (16), more particularly a concave cooling surface, cooled below the freezing point of water, in accordance with the process of claim 1, characterised in that cooling coils (17), preferably evaporator tubes, are in thermally conductive communication with the cooling surface (16) at the rear (18) thereof remote from the application of water; and in that the density of the arrangement of the cooling coils (17) varies according to the locally required cooling power, and the local thickness of the layer of ice to be formed for the component part (19), so that a unitarily growing freezing front is formed.

14. Apparatus for the production of ice figures, from transparent ice if required, using cooling members, more particularly on an evaporator or liquid refrigerant basis, preferably on a glycol basis, which are in communication with a cooling means, in accordance with the process of claim 6, characterised in that at least two cooling members (905, 906) are disposed substantially opposite one another with an open gap therebetween;
in that the cooling members (905, 906) are adapted to be brought into contact with water, in movement if required, so that layers of ice form thereon and grow towards one another and, on contact, form a one-piece ice figure (912, 1012) and
in that means are provided to detect the completion of the one-piece ice figure (912, 1012).

15. Apparatus according to claim 14, characterised in that the means for detecting the completion of the one-piece ice figure (912, 1012) comprise sensors (944, 945) and/or means for electronic image evaluation.

16. Apparatus according to claim 15 or 14, characterised in that the cooling members are arranged coaxially and/or have convex and/or concave cooling surfaces (16; 920, 921).

17. Apparatus according to any one of claims 14 to 16, characterised in that transparent ice forming means, more particularly convection means (916, 914), are provided.

## Revendications

1. Procédé pour fabriquer des figures en glace, éventuellement en glace transparente, à des fins d'ornementation et de décoration,
caractérisé en ce que
pour chaque figure de glace (20), on forme au moins deux parties (19) dans une surface de refroidissement (16), notamment concave, refroidie au-dessous du point de congélation de l'eau, et par le fait qu'on amène de l'eau, éventuellement en déplacement, en une quantité excessive en contact avec la surface de refroidissement (16) et que cette eau se solidifie au moins partiellement sur cette surface de telle sorte que la couche de glace, qui se forme, augmente par croissance à partir de la surface de refroidissement (16); et
qu'on sépare les parties (19) de la surface de refroidissement et on commence à les faire dégeler à plat au niveau d'au moins une partie de la surface libre (24) et qu'on les assemble au niveau des surfaces qui ont commencé à dégeler, et on refroidit à nouveau l'eau dégelée, éventuellement avec de l'eau supplémentaire en tant qu'agent adhésif, au-dessous du point de congélation de l'eau de sorte qu'on obtient des figures de glace monobloc (20) dont les parties (19) ont des surfaces (24) situées à l'intérieur de ces figures et qui étaient antérieurement libres.

2. Procédé selon la revendication 1, caractérisé en ce que pour la formation de parties (19) avec des zones en contre-dépouille et d'éléments de surface qui sont par conséquent situés en vis-à-vis et sont en contact avec la surface de refroidissement, on utilise une surface de refroidissement divisée (16).

3. Procédé selon la revendication 1, caractérisé en ce que la puissance de refroidissement est réglée localement différemment de façon précise en fonction du besoin local de refroidissement.

4. Procédé selon la revendication 1, caractérisé en ce qu'on démoule les parties (19) après un échauffement de brève durée des surfaces de refroidissement (12).

5. Procédé selon la revendication 1, caractérisé en ce qu'on interrompt le processus de formation de glace avant que soit atteinte l'épaisseur désirée de la couche de glace de la partie (19), en supprimant le contact de la surface de refroidissement (16) recouverte de glace avec de l'eau supplémentaire;
que l'eau, qui adhère à la surface de refroidissement, est transformée en glace, de préférence au moyen d'un refroidissement prolongé de la surface de refroidissement (16) et qu'on fait sécher la surface de la glace et qu'on applique éventuellement un sous-refroidissement à cette surface de la glace de telle sorte qu'un insert contenant une matière éventuellement sèche, notamment biologique, de préférence comestible, est placé en contact avec la surface de la glace avant le séchage de cette surface ou qu'un insert mouillé avec un agent adhésif, notamment de l'eau, de préférence préalablement refroidi, est placé en contact avec la surface de la glace après séchage et refroidissement éventuels de la surface de la glace, et y adhère; et
qu'ensuite on place à nouveau la surface de la glace, à laquelle adhère l'insert, en contact avec de l'eau supplémentaire et qu'on poursuit le processus de formation de la glace moyennant l'inclusion de l'insert.

6. Procédé pour fabriquer des figures de glace, éventuellement en glace transparente, à l'aide de corps de refroidissement, qui sont reliés à un dispositif de refroidissement,
caractérisé en ce
qu'on place au moins deux corps de refroidissement, qui sont disposés essentiellement en vis-à-vis l'un de l'autre en délimitant entre eux une fente ouverte, notamment en étant séparés par une distance variable, avec de l'eau éventuellement en déplacement de sorte qu'au niveau de chaque corps de refroidissement il se forme une couche de glace, qui augmente par croissance à partir du corps de refroidissement, la croissance des couches de glace s'effectuant les unes sur les autres;
qu'on effectue un refroidissement jusqu'à ce que, en raison du contact réciproque des couches de glace, il se forme une figure de glace d'un seul tenant, les couches de glace, qui se forment par croissance les unes sur les autres, comblant la distance entre les corps de refroidissement;
qu'on détecte la fabrication terminée de la figure de glace d'un seul tenant et qu'on détache la figure de glace monobloc, des corps de refroidissement, une fois la fabrication achevée.

7. Procédé suivant la revendication 6, caractérisé en ce qu'on modifie selon les besoins la distance réciproque et/ou la puissance de refroidissement et/ou les instants d'activation et d'arrêt de fonctionnement des corps de refroidissement.

8. Procédé suivant la revendication 6, caractérisé en ce que l'achèvement de la fabrication de la figure de glace monobloc est détecté par un capteur et/ou un dispositif électronique d'évaluation d'images.

9. Procédé selon la revendication 1 ou 6, caractérisé en ce qu'on utilise, comme corps de refroidissement, des corps de refroidissement classiques basés sur un agent d'évaporation ou un liquide de refroidissement, de préférence à base de glycol.

10. Procédé selon la revendicatino 1 ou 6, caractérisé en ce qu'on utilise des corps de refroidissement disposés coaxialement et/ou possédant une surface de refroidissement convexe et/ou concave.

11. Procédé selon la revendication 1 ou 6, caractérisé en ce qu'on amène les corps de refroidissement en contact avec l'eau, par immersion, projection ou d'une manière analogue.

12. Procédé selon la revendication 1 ou 6, caractérisé en ce que les figures de glace formées, constituées notamment dans une large mesure par de la glace transparente, possèdent la forme d'objets d'ornementation et/ou d'utilisation, notamment analogues à du verre, comme par exemple des coupes, des tasses, des verres, etc.

13. Dispositif pour fabriquer au moins une partie (19) d'une figure de glace, éventuellement en glace transparente, sur une surface de refroidissement (16) notamment concave, refroidie au-dessous du point de congélation de l'eau, conformément au procédé selon la revendication 1, caractérisé en ce
que sur la face arrière (18), qui est tournée à l'opposé de l'application d'eau, de la surface de refroidissement (16), des serpentins de refroidissement (17), notamment des tubes d'évaporateur, sont reliés selon une liaison thermoconductrice à la surface de refroidissement (16); et
que l'épaisseur du dispositif des serpentins de refroidissement (17) varie en fonction de la puissance de refroidissement désirée localement, et de l'épaisseur locale de la couche de glace devant être formée pour la partie (19), de manière à former un front de congélation qui croît de façon uniforme.

14. Dispositif pour fabriquer les figures de glace, éventuellement en glace transparente, comportant des corps de refroidissement, notamment formés par un agent d'évaporation ou par un liquide de refroidissement, de préférence à base de glycol, qui sont reliés à un dispositif de refroidissement, selon la revendication 6, caractérisé en ce
qu'au moins deux corps de refroidissement (905, 906), entre lesquels est présente une fente ouverte, sont disposés essentiellement en vis-à-vis l'un de l'autre;
les corps de refroidissement (905, 906) sont appropriés pour être placés en contact avec de l'eau éventuellement en déplacement de sorte qu'il se forme sur ces corps des couches de glace qui croissent les unes sur les autres et forment, lorsqu'elles viennent en contact, une figure de glace monobloc (912, 1012), et
qu'il est prévu des dispositifs pour détecter l'achèvement de la fabrication de la figure de glace monobloc (912, 1012).

15. Dispositif selon la revendication 14, caractérisé en ce que les dispositifs servant à détecter l'achèvement de la fabrication de la figure de glace monobloc (912,1012) comprennent des capteurs (944,945) et/ou des dispositifs pour réaliser une évaluation électronique d'images.

16. Dispositif selon la revendication 15 ou 14, caractérisé en ce que les corps de refroidissement sont disposés coaxialement et/ou possèdent des surfaces de refroidissement convexes et/ou concaves (16;920,921).

17. Dispositif selon l'une des revendications 14 à 16, caractérisé en ce qu'il est prévu des dispositifs, notamment des dispositifs de convection (916,914), pour la formation de glace transparente.
